# FASCICULE DE BREVET EUROPEEN

(11) **EP 1 780 616 B1**
(45) Date de publication et mention de la délivrance du brevet: **15.08.2012**
(21) Numéro de dépôt: 06122906.8
(22) Date de dépôt: 25.10.2006
(51) Int. Cl.: G04G 9/00, G04G 9/02

(54) **Ensemble d'affichage à effets décoratifs pour un instrument portable, tel qu'une montre**
Anzeigeanordnung mit dekorativen Effekten für ein tragbares Instrument, wie eine Uhr
Display unit for decorative purposes for a portable instrument, such as a watch

(30) Priorité: 28.10.2005 EP 05110159
(43) Date de publication de la demande: 02.05.2007
(73) Titulaire: Montres Rado S.A., 2543 Lengnau b. Biel (CH)
(72) Inventeur: Furetta, Alessandra, 2540 Grenchen (CH); Verdon, Christian, 1034 Boussens (CH); Basturk, Naci, 2073 Enges (CH)
(74) Mandataire: Ravenel, Thierry Gérard Louis

(56) Documents cités:
- EP-A- 1 566 685
- GB-A- 2 276 071
- US-A1- 2002 045 028
- US-A1- 2004 257 496
- PATENT ABSTRACTS OF JAPAN vol. 006, no. 070 (P-113), 6 mai 1982 (1982-05-06) & JP 57 011320 A (SHARP CORP), 21 janvier 1982 (1982-01-21)

## Description

La présente invention concerne un ensemble d'affichage à effets décoratifs pour un instrument portable, tel qu'une montre. L'ensemble comprend au moins une cellule d'affichage et des moyens de commande reliés à au moins deux électrodes de la cellule. Les moyens de commande sont susceptibles de fournir des signaux électriques, notamment une différence de potentiels aux électrodes de manière à placer la cellule dans un premier état d'affichage d'une information. Dans ce premier état d'affichage, la cellule d'affichage est susceptible d'afficher une information, qui peut être une série de caractères, une image ou une information temporelle. En l'absence de signaux électriques, la cellule d'affichage est dans un second état, dit au repos. Dans ce second état, la cellule d'affichage peut être transparente ou opaque.

La présente invention concerne également une montre, telle qu'une montre-bracelet qui comprend un ensemble d'affichage.

Dans le domaine horloger, il est souvent prévu de garnir le boîtier ou la lunette ou le cadran d'une montre d'éléments décoratifs. Ces éléments décoratifs n'ont aucune autre fonction que d'améliorer l'esthétique de la montre. Des pierres précieuses peuvent être disposées par exemple sur la lunette ou le boîtier de la montre de luxe pour la décorer.

Dans la demande de brevet US 2004/0257496, il est décrit un dispositif d'affichage, qui peut être utilisé pour équiper une montre pour afficher notamment des images tridimensionnelles. Le dispositif d'affichage comprend une cellule à cristaux liquides munie d'électrodes commandées par des moyens de commande pour l'affichage d'une information, et un support comprenant des lentilles, qui est disposé sur une face avant ou une face arrière de la cellule à cristaux liquides. Les lentilles du support sont utilisées principalement en combinaison de la cellule à cristaux liquides pour l'affichage d'une image tridimensionnelle. Par contre, les lentilles ne sont pas prévues pour accroître la visibilité de l'information affichée sur la cellule à cristaux liquides, ce qui est un inconvénient.

Dans la demande de brevet WO 2006/136587, il est décrit un dispositif d'affichage de symboles numériques ou alphanumériques. Pour ce faire, le dispositif comprend un support dans lequel sont incrustées des pierres précieuses, et un circuit imprimé portant des diodes électroluminescentes. Le support est disposé sur le circuit imprimé avec les pierres disposées sur les groupes de diodes. Rien n'est prévu pour combiner un tel support avec une cellule d'affichage notamment à cristaux liquides.

La présente invention a pour but principal de fournir un ensemble d'affichage pour un instrument portable, tel qu'une montre, améliorant la qualité et la manière d'afficher une information, et présentant des effets décoratifs en combinaison de l'information affichée.

A cet effet, la présente invention a pour objet un ensemble d'affichage cité ci-devant qui comprend les caractéristiques définies dans la revendication indépendante 1.

Un avantage de l'ensemble d'affichage selon l'invention, est qu'il permet de fournir une meilleure vision de l'information affichée grâce aux éléments rigides transparents ou semi transparents, qui peuvent être des pierres précieuses taillées. Les rayons lumineux de la lumière ambiante ou d'un dispositif de rétro-éclairage sous la cellule et le support sont réfléchis, réfractés ou diffractés par les pierres, ce qui améliore la lecture de l'information tout en apportant un effet esthétique et décoratif à l'instrument équipé de l'ensemble d'affichage. Cet instrument est de préférence une montre-bracelet ou une montre de poche.

Avantageusement, le support à pierres transparentes ou semi transparentes est placé sous un substrat arrière transparent de la cellule d'affichage. De ce fait dans le cas d'une cellule d'affichage à contraste négatif, certaines pierres précieuses apparaissent à travers des portions de la cellule devenues transparentes lors de l'affichage d'une information, par exemple une information temporelle. Dans un état de repos de la cellule, les pierres précieuses sont cachées par la cellule opaque. De préférence la cellule dans son second état, dit de repos est opaque de couleur foncée, par exemple noire, ou totalement réflecteur de l'apparence d'un miroir.

Avantageusement, la cellule d'affichage comprend plusieurs premières électrodes transparentes configurées en digits formés chacun de segments d'affichage sur une face intérieure d'un substrat avant transparent, au moins une seconde électrode transparente sur une face intérieure d'un substrat arrière transparent, et un cadre de scellement des deux substrats pour définir un espace fermé entre les substrats où sont situées les électrodes et une substance. Les propriétés optiques ou physiques de la substance sont modifiées entre au moins une première électrode et la seconde électrode activées par une différence de potentiels appliqués par les moyens de commande. Tous les éléments rigides du support placé au dos de la cellule d'affichage sont agencés également en digits en regard des digits des premières électrodes. Au moins un élément rigide, c'est-à-dire au moins une pierre précieuse, est entièrement visible par segment actif lors d'une information affichée par une cellule d'affichage à contraste négatif.

Avantageusement, la cellule d'affichage peut comprendre des électrodes agencées sous forme matricielle reliées à des moyens de commande. En fonction de l'adressage des électrodes par les moyens de commande, une information temporelle sous la forme d'aiguilles d'une montre peut être présentée. Dans le premier état d'affichage d'une cellule à contraste négatif pour la présentation de l'information, plusieurs pierres précieuses du support placé au dos de la cellule deviennent visibles. Ces pierres peuvent être des rubis, des saphirs, des émeraudes, des pierres de lune, des diamants, ou d'autres pierres précieuses. Ces pierres peuvent être également des pierres synthétiques, telles que des pierres en oxyde de zirconium cubique monocristallin. De ce fait, plusieurs sortes de pierres de taille égale ou différente peuvent garnir le support afin de donner des couleurs différentes à travers l'information de la cellule et une diffraction ou reflet de la lumière particulier.

Avantageusement, un dispositif de rétro-éclairage est placé sous la cellule d'affichage et le support transparent à éléments rigides transparents. De cette manière, certains éléments rigides sous forme de pierres transparentes ou semi transparentes sont illuminés et visibles par transparence de certaines parties de la cellule dans le champ de vision de l'ensemble d'affichage. La taille des pierres peut être optimisée pour laisser passer un maximum de lumière. Cette taille peut être d'un type brillant ou baguette ou d'autres types à plusieurs facettes.

Dans le cas où le support d'éléments rigides transparents ou semi transparents est placé au-dessus de la cellule d'affichage de préférence à contraste positif, l'information affichée par la cellule est de couleur foncée, par exemple noire. Les parties autour de l'information affichée peuvent apparaître de couleur claire, par exemple blanche ou argentée afin de bien contraster avec l'information lue à travers les éléments rigides du support à la lumière du jour ou avec l'aide du dispositif de rétro-éclairage.

Les buts, avantages et caractéristiques de l'ensemble d'affichage apparaîtront mieux dans la description suivante de formes d'exécution de l'invention non limitatives en liaison avec les dessins dans lesquels :
Les figures 1 et 2 représentent une vue en coupe diamétrale et une vue de dessus d'une première forme d'exécution d'un ensemble d'affichage selon l'invention équipant une montre,
la figure 3 représente une vue en coupe agrandie d'une portion de l'ensemble d'affichage selon l'invention montrant la réflexion, réfraction ou diffraction des rayons lumineux sur et à travers des pierres transparentes ou semi transparentes du support,
les figures 4 et 5 représentent une vue en coupe diamétrale et une vue de dessus d'une seconde forme d'exécution d'un ensemble d'affichage selon l'invention équipant une montre avec indication de l'heure de manière numérique,
la figure 6 représente une vue de dessus d'une troisième forme d'exécution d'un ensemble d'affichage selon l'invention indiquant l'heure de manière analogique à l'aide d'une cellule d'affichage à contraste négatif dans une montre, et
la figure 7 représente une vue de dessus d'une quatrième forme d'exécution d'un ensemble d'affichage selon l'invention indiquant l'heure de manière analogique à l'aide d'une cellule d'affichage à contraste positif dans une montre.

Dans la description suivante, il n'est fait référence qu'à un ensemble d'affichage équipant une montre, par exemple une montre-bracelet en tant qu'instrument portable. Toutes les parties conventionnelles de l'ensemble d'affichage, qui font partie des connaissances générales de l'homme du métier ne seront expliquées que sommairement dans la description suivante. Cependant, il est bien clair qu'un tel ensemble d'affichage peut équiper d'autres instruments portables, tels que des téléphones portables, des organiseurs électroniques ou d'autres instruments.

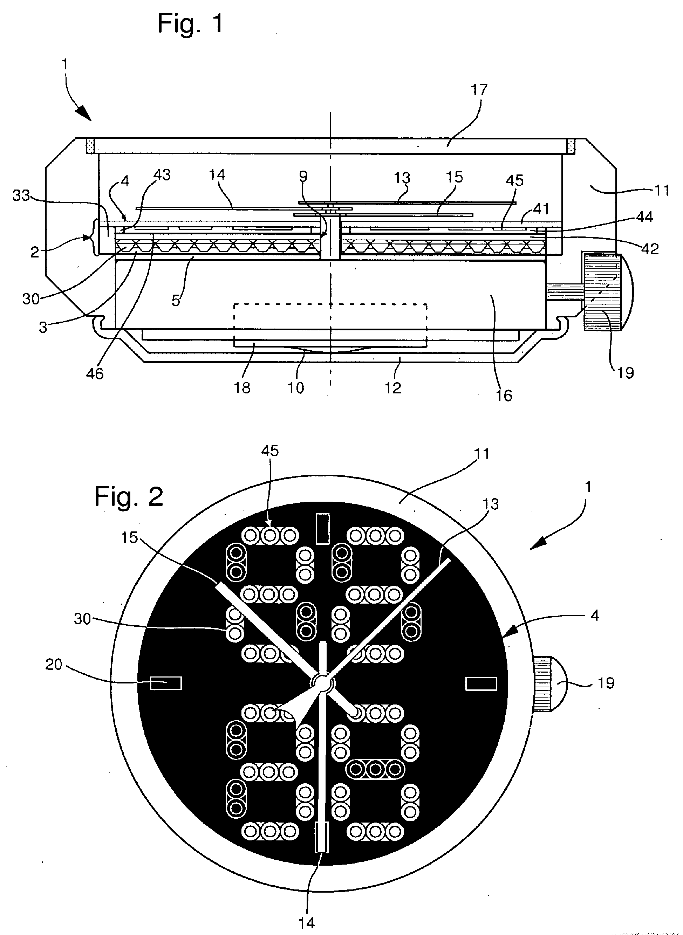

En référence aux figures 1 et 2, on observe une première forme d'exécution d'un ensemble d'affichage 2 selon l'invention dans une montre 1, une partie de l'ensemble d'affichage jouant le rôle de cadran de montre. Cette montre 1 comprend classiquement une boîte 11 munie d'un fond 12 dans laquelle sont disposés un mouvement d'horlogerie électronique 16 et une pile 18 qui prend appui sur le fond 12 par l'intermédiaire d'un ressort de contact 10. La boîte 11 est également fermée de façon classique par une glace 17 recouvrant la totalité du cadran, et un bouton couronne 19 de la boîte permet de régler notamment l'heure de la montre ou la date.

Le mouvement 16 comprend des circuits électroniques garde-temps associés, via un circuit de commande à un dispositif d'entraînement (non représenté) d'une aiguille des secondes 13, d'une aiguille des minutes 14 et d'une aiguille des heures 15. Ces aiguilles se déplacent au-dessus d'un cadran constitué en partie d'une cellule d'affichage 4 de l'ensemble d'affichage 2. Pour ce faire, l'axe des aiguilles passe à travers une ouverture 9 pratiquée au centre de l'ensemble d'affichage 2 afin d'être entraînée par le dispositif d'entraînement du mouvement d'horlogerie 16.

L'ensemble d'affichage 2 selon l'invention comprend une cellule d'affichage 4 à contraste négatif, un support transparent ou semi transparent 3 formant une grille maintenant plusieurs éléments rigides transparents ou semi transparents 30, le support étant disposé en dessous de la cellule d'affichage 4, et un dispositif de rétro-éclairage 5 sous le support à éléments rigides 30. Le dispositif de rétro-éclairage peut être une feuille électroluminescente 5 ou un guide de lumière combiné avec une diode électroluminescente latéralement à proximité de la boîte 11 de montre 1. Ce dispositif de rétro-éclairage permet dans l'obscurité de visionner les informations de la cellule d'affichage tout en traversant les éléments rigides 30 visibles du support 3.

Il peut être envisagé également d'utiliser un dispositif d'éclairage frontal placé au-dessus de la cellule 4 et/ou du support 3 d'éléments rigides transparents ou semi transparents 30. Ce dispositif d'éclairage frontal peut être composé par exemple d'une diode électroluminescente classique (LED) ou organique (OLED) disposée à proximité de la boîte 11 de montre.

La cellule d'affichage 4 comprend un substrat transparent avant de vision 41, c'est-à-dire dans le champ de vision de l'information affichée pour un utilisateur, un substrat transparent arrière 42, un cadre d'espacement et de scellement 43 des deux substrats, et une substance 44 occupant l'espace fermé entre les substrats. Le substrat 41 avant porte sur une face intérieure des premières électrodes transparentes 45 configurées sous forme de digits, qui sont formés chacun de 7 segments d'affichage, qui peuvent être d'une largeur et d'une longueur adaptée à la dimension des éléments rigides 30 utilisés. La largeur peut être inférieure à 1 mm, par exemple de l'ordre de 0.8 mm ou inférieure, mais peut aussi être choisie également supérieure à 1 mm, par exemple de l'ordre de 1,5 mm ou supérieure.

Le substrat arrière 42 porte sur une face intérieure une seconde électrode transparente 46 en regard de toutes les premières électrodes 45. La substance entre les premières et seconde électrodes est choisie de manière que ses propriétés chimiques ou physiques sont modifiées entre des premières et secondes électrodes activées par des signaux électriques, par exemple une différence de potentiels fournis par des moyens de commande non représentés du mouvement horloger 16. Ces moyens de commande sont reliés électriquement à la cellule d'affichage 4 au moyen d'un connecteur 33. Bien entendu, les substrats avant et arrière peuvent porter également des polariseurs non représentés.

Par la configuration sous forme de digits des premières électrodes 45, la cellule d'affichage 4 en combinaison des éléments rigides 30 transparents du support 3 permet de fournir une information numérique temporelle, par exemple l'heure du jour, comme montré à la figure 2. Les premières électrodes 45 non activées des digits sont montrées de couleur foncée ainsi que les éléments rigides non visibles en dessous de ces premières électrodes. A la lumière du jour, une information horaire à l'aide des aiguilles, ainsi qu'une information numérique de l'heure peuvent être fournies à l'utilisateur de la montre 1. L'affichage numérique peut être combiné ou non avec des aiguilles.

Dans cette première forme d'exécution montrée aux figures 1 et 2, la cellule d'affichage 4 est à contraste négatif, et le substrat avant 41 de la cellule d'affichage 4 porte des heures index 20 visibles sur la figure 2. Dans le second état de repos de la cellule d'affichage, la cellule est opaque de couleur foncée et uniquement une information analogique de l'heure à l'aide des aiguilles 13, 14 et 15, et des index 20 est fournie à l'utilisateur de la montre 1.

La cellule d'affichage peut être une cellule à cristaux liquides du type nématique en hélice (TN ou STN), du type à texture cholesterique (CT), une cellule bistable à cristaux liquides (ZBD, Nemoptic ou autres), une cellule électrolytique, une cellule électrochromique bistable, une cellule électrophorétique, une cellule à électromouillage, une cellule à polymère dispersé (PDLC), une cellule à commutation dans le plan (IPS), une cellule à modulation d'interférence (IMOD), une cellule à diodes électroluminescentes organiques (OLED), une cellule du type micro-électromécanique (MEMS) ou d'autres cellules susceptibles de présenter un état transparent et un état opaque. De préférence pour la combinaison du support à éléments rigides avec la cellule d'affichage pour la lecture d'une information, les types d'affichage les plus transparents doivent si possible être sélectionnés. Pour cela, il peut être préférable de choisir une cellule d'affichage à cristaux liquides du type à texture cholestérique qui est plus transmissive (70 à 80%) que les autres cellules. A titre comparatif, une cellule d'affichage à cristaux liquides du type nématique avec deux polariseurs possède une transmission de l'ordre de 40%. Pour plus d'informations au sujet des différents types de cellules, le lecteur peut se référer à la demande de brevet WO 99/32945 ou au brevet européen EP 0 078 237 B1 au nom de la Demanderesse.

Il est à noter que la cellule d'affichage 4 de la première forme d'exécution peut être aussi à contraste positif. Dans ce cas, dans le second état au repos de la cellule d'affichage, tous les éléments rigides 30 du support 3 sont visibles dans le champ de vision de l'ensemble d'affichage 2.

Les éléments rigides 30 du support 3 de l'ensemble d'affichage 2 selon l'invention sont de préférence des pierres précieuses, telles que des diamants taillés, ou des pierres synthétiques, telles que des pierres en oxyde de zirconium cubique monocristallin. Ces pierres précieuses peuvent être serties ou fixées sur ou dans le support 3, ou être intégrées dans un support transparent, par exemple plastique. Les pierres précieuses peuvent également être fixées au support tout en le traversant de part en part. Dans ce cas, il n'est pas forcément nécessaire que le support soit transparent, si les pierres précieuses sont transparentes ou semi transparentes.

Les pierres précieuses 30 peuvent être disposées rapprochées l'une de l'autre sur toute la surface du support 3. La largeur adéquate de chaque pierre précieuse peut être choisie inférieure à 1 mm, par exemple de l'ordre de 0.8 mm (0.01 carat) par exemple en fonction de la largeur choisie d'un segment de digit. L'espace séparant chaque pierre précieuse est inférieur à la largeur des pierres, notamment inférieur à 0.5 mm, par exemple 0.15 mm. Bien entendu, il est tout à fait imaginable de munir le support de pierres précieuses de taille supérieure à 1 mm, par exemple de l'ordre de 1,5 mm ou supérieure.

Plusieurs sortes de pierres de couleur différente peuvent garnir le support. Les pierres précieuses 30 peuvent être des rubis, des saphirs, des émeraudes, des pierres de lune, des diamants, ou d'autres pierres précieuses. Chaque pierre peut être taillée en deux parties sensiblement tronconiques depuis une zone intermédiaire la plus large, ou posséder plusieurs facettes taillées. La dimension des pierres disposées sur le support peut être différente. Des pierres de couleur ou de taille différentes peuvent être sélectionnées pour chaque digit de l'information à afficher par la cellule d'affichage 4. La taille des pierres peut être choisie parmi des types, tels que brillant, baguette ou autres types à multiples facettes pour donner un éclat lumineux aux pierres visibles.

Dans une mesure d'économie de pierres précieuses, il peut être envisagé de placer et maintenir uniquement des pierres précieuses 30 du support 3 en dessous de chaque segment des digits des premières électrodes transparentes 45. La dimension des segments et des pierres précieuses est choisie de manière à voir au moins une pierre précieuse, de préférence au moins deux pierres précieuses, par segment activé (transparent) de la cellule d'affichage. Dans ce cas de figure, il est possible d'observer entièrement 2 ou 3 pierres précieuses à travers certains segments transparents.

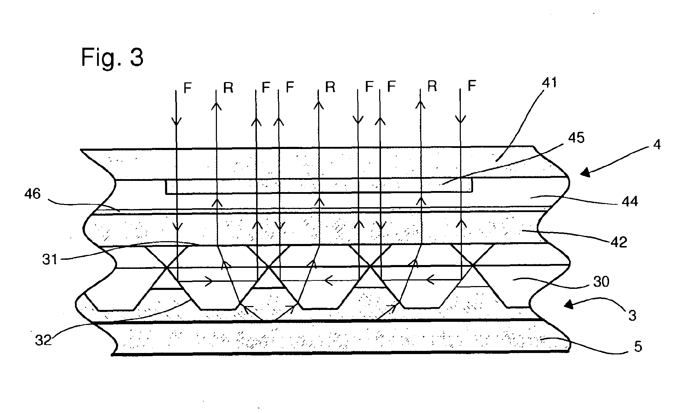

Comme on peut mieux le remarquer à la figure 3 d'une portion agrandie de l'ensemble d'affichage, chaque pierre peut être taillée de manière à présenter au moins une facette supérieure 31 parallèle au substrat arrière 42 de la cellule d'affichage 4. De ce fait à la lumière du jour dans le premier état d'affichage de la cellule d'affichage, la lumière F pénètre par la facette supérieure 31 de chaque pierre visible à travers chaque segment transparent représentatif de l'information à afficher. Cette lumière F peut être réfléchie par des facettes inférieures 32 de chaque pierre visible, étant donné la différence d'indice de réfraction entre la pierre précieuse et le matériau du support par exemple ou l'air dans le cas où les pierres sont serties dans une grille en tant que support. Cette lumière réfléchie sur les facettes inférieures peut ressortir par exemple par la facette supérieure de la pierre précieuse donnant un éclat lumineux à l'information affichée.

Comme un dispositif de rétro-éclairage est également prévu dans cette première forme d'exécution, la lumière R produite par le dispositif traverse également les pierres précieuses visibles dans le champ de vision de l'information. De ce fait selon l'invention, il est possible de combiner l'information de la cellule dans son premier état d'affichage avec la réfraction de lumière au travers des pierres précieuses visibles et/ou la réflexion de lumière sur ou dans les pierres précieuses visibles. Des effets de couleurs peuvent également apparaître par diffraction de la lumière du jour à travers les pierres précieuses visibles, ce qui peut améliorer la vision de l'information tout en apportant un effet esthétique à la montre.

Une attention toute particulière doit être prise concernant la taille de chaque pierre précieuse (diamant) et leur placement sur le support de manière que la lumière produite par le dispositif de rétro-éclairage passe bien à travers les pierres visibles pour une bonne lisibilité de l'information dans des lieux obscurs ou dans la nuit.

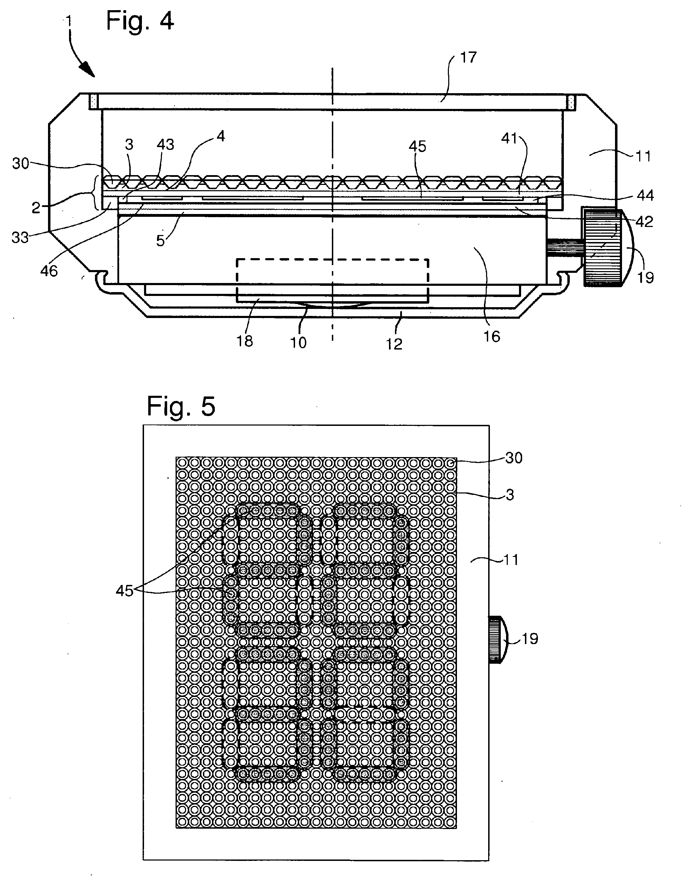

Dans les figures 4 et 5, une seconde forme d'exécution de l'ensemble d'affichage 2, équipant une montre 1 dont la boîte 11 est de forme rectangulaire en vue de dessus, est présentée. Il est à noter que tous les éléments de la montre 1, qui comprend l'ensemble d'affichage 2 selon l'invention décrits ci-après portent des signes de référence identiques à ceux présentés aux figures 1 et 2. Par simplification, il ne sera ainsi pas répété la description de chaque élément pour les figures 4 et 5.

La différence essentielle de cette seconde forme d'exécution réside dans le fait que le support 3 à pierres précieuses 30 est disposé cette fois au-dessus de la cellule d'affichage 4. Le support avec les pierres précieuses constitue la partie directement visible du cadran de la montre. De ce fait, il est préférable que les pierres 30 garnissent tout le support 3 jusqu'au bord intérieur de la boîte 11. L'espace entre chaque pierre est inférieur à la largeur de chaque pierre précieuse.

La cellule d'affichage 4 est de préférence à contraste positif pour mieux contraster l'information affichée à travers le réseau de pierres précieuses 30 sur le support. De plus, un dispositif de rétro-éclairage 5 peut être disposé sous la cellule d'affichage 4 pour illuminer les pierres précieuses à travers les parties transparentes de la cellule d'affichage.

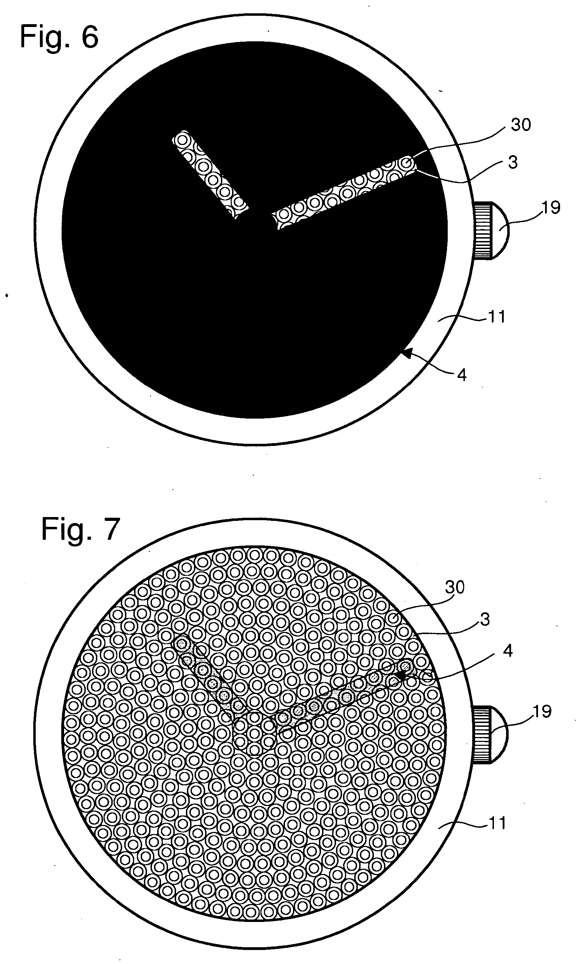

Aux figures 6 et 7, il est présenté une vue de dessus (champ de vision) d'une troisième et une quatrième forme d'exécution de l'ensemble d'affichage équipant une montre 1. La boîte 11 de montre est de forme ovale ou circulaire en vue de dessus. Tous les éléments de la montre 1, qui comprend l'ensemble d'affichage 2 selon l'invention décrits ci-après portent des signes de référence identiques à ceux présentés aux figures 1 à 5. Par simplification, il ne sera pas répété la description de chaque élément pour les figures 6 et 7.

La différence essentielle dans ces troisième et quatrième formes d'exécution représentées réside dans le fait que la cellule d'affichage est du type matriciel. Elle comprend plusieurs lignes de premières électrodes transparentes sur une face intérieure d'un substrat avant transparent, et plusieurs lignes de secondes électrodes sur une face intérieure d'un substrat arrière transparent. Les lignes des premières électrodes sont disposées perpendiculairement aux lignes des secondes électrodes. Ainsi les moyens de commande dans un premier état d'affichage de la cellule d'affichage adressent par multiplexage et sélectivement des lignes des premières et secondes électrodes pour afficher une information. L'information affichée par la cellule dans son premier état d'affichage représente une information horaire sous la forme d'aiguilles d'une montre.

A la figure 6, la cellule d'affichage 4 est à contraste négatif avec le support portant sur toute sa surface des pierres précieuses 30, qui est placé au dos de la cellule. L'indication horaire apparaît en clair sur fond sombre avec la vision de pierres précieuses à travers les aiguilles de la cellule.

A la figure 7, il est utilisé une cellule d'affichage 4 à contraste positif avec le support portant sur toute sa surface des pierres précieuses 30 placé devant la cellule. Dans ce cas, l'indication horaire à travers le support à pierres précieuses est de couleur foncée, par exemple noire, sur fond clair.

Bien entendu il peut être utilisé un dispositif de rétro-éclairage pour les troisième et quatrième formes d'exécution de l'ensemble d'affichage pour faciliter la lecture de l'information dans l'obscurité. Cependant, il peut également être concevable que le dispositif de rétro-éclairage soit remplacé par une couche réflective, telle qu'un miroir ou une couche de couleur blanche.

D'autres variantes de réalisation de l'ensemble d'affichage à l'aide d'une double cellule d'affichage à cristaux liquides placée sous le verre de montre peuvent être conçues également comme montré dans la demande de brevet WO 99/32945, qui est pris ici comme document de référence. Le support à pierres précieuses est disposé dans ce cas entre la première cellule d'affichage d'une information et la seconde cellule servant de valve optique. Si les deux cellules d'affichages sont transparentes, une indication de l'heure à l'aide des aiguilles de la montre en dessous des cellules peut être vue à travers le support de pierres précieuses.

A partir de la description qui vient d'être faite de multiples variantes de réalisation de l'ensemble d'affichage peuvent être conçues par l'homme du métier sans sortir du cadre de l'invention définie par les revendications. La cellule d'affichage, ainsi que le support de pierres précieuses peuvent être courbés sous la forme d'une portion de cylindre afin d'équiper une montre dont le boîtier est également courbé. Les substrats avant et arrière de la cellule d'affichage peuvent être flexibles. L'information affichée par l'ensemble d'affichage peut être du type alphanumérique, voire une image ou un motif. Les électrodes de la cellule peuvent être reliées par un élément résistif ou corps de chauffe de manière à chauffer localement la substance afin de modifier ses propriétés optiques, par exemple par modification de couleur. La cellule d'affichage peut être également une cellule du type électro-micromécanique dans laquelle les électrodes commande l'ouverture ou la fermeture de volets opaques pour afficher une information. Cette cellule d'affichage peut également comprendre une substance opaque, qui peut être momentanément déplacée par endroit comme pour une micro-pompe pour placer la cellule dans son premier état d'affichage d'une information. La cellule d'affichage peut être placée juste en dessous du verre d'une montre analogique, alors que le support de pierres précieuses est disposé sur le cadran en dessous des aiguilles de la montre.

## Revendications

1. Ensemble d'affichage (2) pour un instrument portable, tel qu'une montre (1), l'ensemble comprenant :
- au moins une cellule d'affichage (4), qui est une cellule d'affichage à cristaux liquides ou une cellule d'affichage électro-chromique ou une cellule d'affichage électrolytique ou une cellule d'affichage à électro-mouillage ou une cellule à polymère dispersé ou une cellule du type micro-électromécanique ou une cellule à modulation d'interférence ou une cellule à diodes électroluminescentes organiques,
- des moyens de commande reliés à au moins deux électrodes de la cellule, lesdits moyens de commande fournissant des signaux électriques aux électrodes pour placer la cellule dans un premier état d'affichage d'une information, la cellule étant dans un second état de repos en l'absence de signaux électriques, et
- plusieurs éléments rigides transparents ou semi transparents (30) maintenus sur ou dans un support (3), qui est disposé sur une face avant de vision (41) de la cellule d'affichage ou alternativement sur une face arrière (42) de la cellule d'affichage de manière à combiner l'information de la cellule dans son premier état d'affichage avec la réfraction de lumière (R) au travers des éléments transparents ou semi transparents (30) et/ou la réflexion de lumière (F) sur ou dans les éléments transparents ou semi transparents (30) visibles,
**caractérisé en ce que** les éléments rigides transparents ou semi transparents sont des pierres précieuses (30) ou des pierres synthétiques, qui sont en deux parties sensiblement tronconiques depuis une zone intermédiaire la plus large et qui comprennent plusieurs facettes taillées (31, 32), dont au moins une facette plane supérieure (31) de chaque pierre est disposée parallèlement à la face avant (41) ou à la face arrière (42) de la cellule d'affichage, et dont des facettes inférieures (32) de chaque pierre taillée sont inclinées d'un angle inférieur à 90° par rapport à la face avant ou à la face arrière de manière à réfracter et/ou réfléchir ou diffracter une partie de la lumière (F) traversant certaines pierres visibles.

2. Ensemble d'affichage (2) selon la revendication 1, **caractérisé en ce que** les pierres précieuses (30) sont des rubis, des saphirs, des émeraudes, des pierres de lune ou des diamants, **en ce que** les pierres précieuses sont taillées sous la forme du type brillant ou du type baguette, et **en ce que** les pierres synthétiques sont des pierres en oxyde de zirconium cubique monocristallin.

3. Ensemble d'affichage (2) selon la revendication 1, **caractérisé en ce que** la dimension de chaque pierre précieuse placée dans ou sur le support est égale.

4. Ensemble d'affichage (2) selon la revendication 1, **caractérisé en ce que** les pierres taillées (30) sont fixées sur ou dans un support transparent ou semi transparent (3), et **en ce que** les pierres taillées sont de couleur différente et/ou de taille différente.

5. Ensemble d'affichage (2) selon l'une des revendications précédentes, **caractérisé en ce que** la cellule d'affichage (4) comprend plusieurs premières électrodes transparentes (45) configurées en digits formés chacun de segments d'affichage sur une face intérieure d'un substrat avant transparent (41), au moins une seconde électrode transparente (46) sur une face intérieure d'un substrat arrière transparent (42), et un cadre de scellement (43) des deux substrats pour définir un espace fermé entre les substrats où sont situées les électrodes et une substance (44), dont les propriétés optiques ou physiques sont modifiées entre au moins une première électrode et la seconde électrode activées par une différence de potentiels appliqués par les moyens de commande, et **en ce que** le support de pierres taillées (30) est placé sur une face extérieure du substrat avant ou alternativement sur une face extérieure du substrat arrière.

6. Ensemble d'affichage (2) selon la revendication 5 dans lequel le support (3) de pierres taillées (30) est disposé du côté de la face extérieure du substrat arrière (42) de la cellule d'affichage à contraste négatif (4), **caractérisé en ce que** toutes les pierres taillées du support sont agencées sur le support sous forme de digits en regard des premières électrodes (45) configurées en digits, et **en ce que** la forme et la dimension de chaque segment des premières électrodes sont choisies de manière à apercevoir entièrement ou partiellement au moins deux pierres taillées par segment activé dans le premier état d'affichage d'une information de la cellule d'affichage.

7. Ensemble d'affichage (2) selon l'une des revendications 1 à 4, **caractérisé en ce que** la cellule d'affichage du type matriciel (4) comprend plusieurs lignes de premières électrodes transparentes (45) sur une face intérieure d'un substrat avant transparent (41), plusieurs lignes de secondes électrodes transparentes (46) sur une face intérieure d'un substrat arrière transparent (42) disposées perpendiculairement aux lignes des premières électrodes, et un cadre de scellement (43) des deux substrats pour définir un espace fermé entre les substrats où sont situées les électrodes et une substance (44), dont les propriétés optiques ou physiques sont modifiées par une différence de potentiels appliqués entre des premières et secondes électrodes sélectivement adressées par les moyens de commande dans un premier état d'affichage de la cellule d'affichage pour afficher une information, et **en ce que** le support (3) de pierres taillées (30) est placé sur une face extérieure du substrat avant ou alternativement sur une face extérieure du substrat arrière.

8. Ensemble d'affichage (2) selon l'une des revendications 1 et 7, **caractérisé en ce que** l'information affichée par la cellule dans son premier état d'affichage représente une information horaire sous la forme d'aiguilles d'une montre.

9. Ensemble d'affichage (2) selon l'une des revendications précédentes, **caractérisé en ce qu'**un dispositif de rétro-éclairage (5) est disposé en dessous de la cellule (4) et du support (3) de pierres taillées (30) pour éclairer des pierres taillées visibles lors de la lecture de l'information dans le premier état de la cellule d'affichage.

10. Ensemble d'affichage (2) selon l'une des revendications 1 à 8, **caractérisé en ce qu'**un dispositif d'éclairage frontal est disposé en dessus de la cellule (4) et du support (3) de pierres taillées (30) pour éclairer des pierres taillées visibles notamment lors de la lecture de l'information dans le premier état de la cellule d'affichage.

11. Ensemble d'affichage (2) selon l'une des revendications 9 et 10, **caractérisé en ce que** le dispositif de rétro-éclairage ou le dispositif d'éclairage frontal comprend une feuille électroluminescente (5) ou une diode électroluminescente classique ou organique.

12. Montre (1), du type montre-bracelet comprenant dans une boîte (11) fermée par un verre (17) un ensemble d'affichage (2) selon l'une des revendications précédentes.

13. Montre (1) selon la revendication 12, **caractérisée en ce que** l'ensemble d'affichage (2) constitue en partie le cadran de la montre, et **en ce que** des aiguilles d'indication de l'heure (13, 14, 15), qui sont entraînées par un dispositif d'entraînement d'un mouvement horloger (16), traversent le support (3) de pierres taillées (30) et la cellule d'affichage (4) pour l'indication de l'heure.

14. Montre (1) selon la revendication 12, **caractérisée en ce que** des aiguilles d'indication de l'heure (13, 14, 15), qui sont entraînées par un dispositif d'entraînement d'un mouvement horloger (16), traversent le support (3) de pierres taillées (30), qui forme une partie du cadran de montre, et **en ce que** la cellule d'affichage (4) pour l'indication de l'heure est disposée au-dessus des aiguilles de la montre et au-dessous du verre (17) de montre.

## Claims

1. Display unit (2) for a portable instrument, such as a watch (1), the unit comprising :
- at least one display cell (4), which is a liquid crystal display cell or an electro-chromic display cell or an electrolytic display cell or an electro-wetting display cell or a polymer-dispersed cell or a cell of the micro-electromechanical type or an interference modulation cell or an organic electroluminescent diode cell,
- control means connected to at least two electrodes of the cell, said control means providing electrical signals to the electrodes in order to place the cell in a first state for displaying information, the cell being in a second state at rest in the absence of electrical signals, and
- a plurality of transparent or semi-transparent rigid elements (30) supported on or in a support (3), which is disposed on a front face (41) of vision of the display cell or alternatively on a rear face (42) of the display cell in order to combine information of the cell in its first display state with light refraction (R) through the transparent or semi-transparent rigid elements (30) and/or light reflection (F) on or in the visible transparent or semi-transparent rigid elements (30),
**characterised in that** the transparent or semi-transparent rigid elements are precious stones (30) or synthetic stones, which are in two substantially truncated parts from the widest intermediate zone and have several cut facets (31, 32), whose at least one upper flat facet (31) of each stone is disposed parallel to the front face (41) or to the rear face (42) of the display cell, and whose lower facets (32) of each cut stone are inclined by an angle less than 90° relative to the front face or to the rear face in order to refract and/or to reflect or to diffract a part of the light (F) passing through some of the visible stones.

2. Display unit (2) according to claim 1, **characterised in that** the precious stones (30) are rubies, sapphires, emeralds, moonstones or diamonds, **in that** the precious stones are cut under the shape of a brilliant or baguette type, and **in that** the synthetic stones are mono-crystalline cubic zirconium oxide stones.

3. Display unit (2) according to claim 1, **characterised in that** the dimension of each precious stone placed in or on the support is the same.

4. Display unit (2) according to claim 1, **characterised in that** the cut stones (30) are fixed on or in a transparent or semi-transparent support (3), and **in that** the cut stones are of a different colour and/or of a different size.

5. Display unit (2) according to one of the preceding claims, **characterised in that** the display cell (4) comprises a plurality of transparent first electrodes (45) which are configured in digits, each formed by display segments on an interior face of a transparent front substrate (41), at least one transparent second electrode (46) on an interior face of a transparent rear substrate (42), and a fixing frame (43) for the two substrates in order to define a closed space between the substrates where the electrodes and a substance (44) are situated, the optical or physical properties of which are modified between at least one first electrode and the second electrode which are activated by a difference of potentials applied via the control means, and **in that** the cut stone (30) support is placed on an exterior face of the front substrate or alternatively on an exterior face of the rear substrate.

6. Display unit (2) according to claim 5, in which the support (3) for the cut stones (30) is disposed on the side of the exterior face of the rear substrate (42) of the display cell with negative contrast (4), **characterised in that** all the cut stones of the support are disposed on the support in the form of digits opposite first electrodes (45) which are configured in digits, and **in that** the form and the dimension of each segment of the first electrodes are chosen for perception entirely or partially of at least two cut stones per activated segment in the first state for displaying information of the display cell.

7. Display unit (2) according to one of the claims 1 to 4, **characterised in that** the display cell of the matrix type (4) comprises a plurality of lines of transparent first electrodes (45) on an interior face of a transparent front substrate (41), a plurality of lines of transparent second electrodes (46) on an interior face of a transparent rear substrate (42) which are disposed perpendicularly to the lines of first electrodes, and a fixing frame (43) for the two substrates in order to define a closed space between the substrates where the electrodes and a substance (44) are situated, the optical or physical properties of which are modified by a difference of potentials applied between the first and second electrodes which are selectively addressed by the control means in a first display state of the display cell in order to display information, and **in that** the support (3) of the cut stones (30) is placed on an exterior face of the front substrate or alternatively on an exterior face of the rear substrate.

8. Display unit (2) according to one of the claims 1 and 7, **characterised in that** the information displayed by the cell in its first display state represents horary information in the form of hands of a watch.

9. Display unit (2) according to one of the preceding claims, **characterised in that** a backlighting device (5) is disposed below the cell (4) and the support (3) of the cut stones (30) in order to illuminate visible cut stones during reading of the information in the first state of the display cell.

10. Display unit (2) according to one of the claims 1 to 8, **characterised in that** a front lighting device is disposed above the cell (4) and the support (3) of the cut stones (30) in order to illuminate visible cut stones in particular during reading of the information in the first state of the display cell.

11. Display unit (2) according to one of the claims 9 and 10, **characterised in that** the backlighting device or the front lighting device comprises an electroluminescent foil (5) or a standard or organic electroluminescent diode.

12. Watch (1), of the wristwatch type comprising in a casing (11) closed by a glass (17), a display unit (2) according to one of the preceding claims.

13. Watch (1) according to claim 12, **characterised in that** the display unit (2) comprises in part the dial of the watch, and **in that** hands for indicating the time (13, 14, 15) which are driven by a drive device of a watch movement (16) pass through the support (3) of the cut stones (30) and the display cell (4) for indicating the time.

14. Watch (1) according to claim 12, **characterised in that** hands for indicating the time (13, 14, 15) which are driven by a device for driving a watch movement (16) pass through the support (3) of the cut stones (30), which forms a part of the watch dial, and **in that** the display cell (4) for indicating the time is disposed above the hands of the watch and below the glass (17) of the watch.

## Patentansprüche

1. Anzeigeanordnung (2) für ein tragbares Instrument wie eine Uhr (1), wobei die Anordnung umfasst:
- mindestens eine Anzeigezelle (4), die eine Flüssigkristall-Anzeigezelle oder eine elektrochrome Anzeigezelle oder eine elektrolytische Anzeigezelle oder eine Elektrobenetzungs-Anzeigezelle oder eine Polymerdispersionszelle oder eine Zelle des mikroelektromechanischen Typs oder eine Interferenzmodulationszelle oder eine Zelle mit organischen Elektrolumineszenzdioden ist,
- Steuermittel, die mit mindestens zwei Elektroden der Zelle verbunden sind, wobei die Steuermittel elektrische Signale zu den Elektroden liefern, um die Zelle in einen ersten Informationsanzeigezustand zu setzen, wobei die Zelle sich bei Abwesenheit von elektrischen Signalen in einem zweiten Ruhezustand befindet, und
- mehrere starre transparente oder halbtransparente Elemente (30), die auf oder in einem Träger (3) gehalten werden, der auf einer Sichtvorderseite (41) der Anzeigezelle oder alternativ auf einer Rückseite (42) der Anzeigezelle angeordnet ist, um die Information der Zelle in ihrem ersten Anzeigezustand mit der Brechung von Licht (R) durch die transparenten oder halbtransparenten Elemente (30) und/oder der Reflexion von Licht (F) an oder in den sichtbaren transparenten oder halbtransparenten Elementen (30) zu kombinieren,
**dadurch gekennzeichnet, dass** die starren transparenten oder halbtransparenten Elemente Edelsteine (30) oder synthetische Steine sind, die von einer breitesten Zwischenzone zweiteilig im Wesentlichen kegelstumpfförmig sind und die mehrere geschliffene Facetten (31, 32) umfassen, von denen mindestens eine ebene obere Facette (31) jedes Steins parallel zur Vorderseite (41) oder zur Rückseite (42) der Anzeigezelle angeordnet ist, und von denen untere Facetten (32) jedes geschliffenen Steins in einem Winkel, der geringer ist als 90°, in Bezug auf die Vorderseite oder die Rückseite geneigt sind, um einen Teil des Lichts (F), das bestimmte sichtbare Steine durchquert, zu brechen und/oder zu reflektieren oder zu beugen.

2. Anzeigeanordnung (2) nach Anspruch 1, **dadurch gekennzeichnet, dass** die Edelsteine (30) Rubine, Saphire, Smaragde, Mondsteine oder Diamanten sind und dass die Edelsteine in Form des Typs Brillant oder des Typs Stäbchen geschliffen sind, und dass die synthetischen Steine Steine aus monokristallinem kubischem Zirkonoxid sind.

3. Anzeigeanordnung (2) nach Anspruch 1, **dadurch gekennzeichnet, dass** die Abmessung jedes Edelsteins, der in oder auf dem Träger angeordnet ist, gleich ist.

4. Anzeigeanordnung (2) nach Anspruch 1, **dadurch gekennzeichnet, dass** die geschliffenen Steine (30) auf oder in einem transparenten oder halbtransparenten Träger (3) befestigt sind und dass die geschliffenen Steine eine unterschiedliche Farbe und/oder eine unterschiedliche Größe aufweisen.

5. Anzeigeanordnung (2) nach einem der vorangehenden Ansprüche, **dadurch gekennzeichnet, dass** die Anzeigezelle (4) mehrere erste transparente Elektroden (45), die in Ziffern konfiguriert sind, die jeweils aus Anzeigesegmenten gebildet sind, auf einer Innenfläche eines vorderen transparenten Substrats (41), mindestens eine zweite transparente Elektrode (46) auf einer Innenfläche eines hinteren transparenten Substrats (42) und einen Versiegelungsrahmen (43) für die zwei Substrate umfasst, um einen geschlossenen Raum zwischen den Substraten zu definieren, in dem sich die Elektroden und eine Substanz (44) befinden, deren optische oder physikalische Eigenschaften zwischen mindestens einer ersten Elektrode und der zweiten Elektrode modifiziert werden, die durch eine Differenz von Potentialen aktiviert werden, die durch die Steuermittel angelegt werden, und dass der Träger der geschliffenen Steine (30) auf einer Außenfläche des vorderen Substrats oder alternativ auf einer Außenfläche des hinteren Substrats angeordnet ist.

6. Anzeigeanordnung (2) nach Anspruch 5, in dem der Träger (3) der geschliffenen Steine (30) auf der Seite der Außenfläche des hinteren Substrats (42) der Anzeigezelle mit negativem Kontrast (4) angeordnet ist, **dadurch gekennzeichnet, dass** alle geschliffenen Steine des Trägers auf dem Träger in Form von Ziffern gegenüber den ersten Elektroden (45) angeordnet sind, die in Ziffern konfiguriert sind, und dass die Form und die Abmessung jedes Segments der ersten Elektroden gewählt sind, um mindestens zwei geschliffene Steine pro aktiviertes Segment im ersten Informationsanzeigezustand der Anzeigezelle vollständig oder teilweise wahrzunehmen.

7. Anzeigeanordnung (2) nach einem der Ansprüche 1 bis 4, **dadurch gekennzeichnet, dass** die Anzeigezelle des Matrixtyps (4) mehrere Reihen von ersten transparenten Elektroden (45) auf einer Innenfläche eines vorderen transparenten Substrats (41), mehrere Reihen von zweiten transparenten Elektroden (46) auf einer Innenfläche eines hinteren transparenten Substrats (42), die senkrecht zu den Reihen der ersten Elektroden angeordnet sind, und einen Versiegelungsrahmen (43) für die zwei Substrate umfasst, um einen geschlossenen Raum zwischen den Substraten zu definieren, in dem sich die Elektroden und eine Substanz (44) befinden, deren optische oder physikalische Eigenschaften durch eine Differenz von Potentialen modifiziert werden, die zwischen den ersten und zweiten Elektroden angelegt werden, die selektiv durch die Steuermittel in einem ersten Anzeigezustand der Anzeigezelle zum Anzeigen einer Information adressiert werden, und dass der Träger (3) der geschliffenen Steine (30) auf einer Außenfläche des vorderen Substrats oder alternativ auf einer Außenfläche des hinteren Substrats angeordnet ist.

8. Anzeigeanordnung (2) nach einem der Ansprüche 1 und 7, **dadurch gekennzeichnet, dass** die durch die Zelle in ihrem ersten Anzeigezustand angezeigte Information eine Uhrzeitinformation in Form von Zeigern einer Uhr darstellt.

9. Anzeigeanordnung (2) nach einem der vorangehenden Ansprüche, **dadurch gekennzeichnet, dass** eine Hintergrundbeleuchtungsvorrichtung (5) unter der Zelle (4) und dem Träger (3) der geschliffenen Steine (30) angeordnet ist, um sichtbare geschliffene Steine beim Lesen der Information im ersten Zustand der Anzeigezelle zu beleuchten.

10. Anzeigeanordnung (2) nach einem der Ansprüche 1 bis 8, **dadurch gekennzeichnet, dass** eine Frontbeleuchtungsvorrichtung über der Zelle (4) und dem Träger (3) der geschliffenen Steine (30) angeordnet ist, um sichtbare geschliffene Steine insbesondere beim Lesen der Information im ersten Zustand der Anzeigezelle zu beleuchten.

11. Anzeigeanordnung (2) nach einem der Ansprüche 9 und 10, **dadurch gekennzeichnet, dass** die Hintergrundbeleuchtungsvorrichtung oder die Frontbeleuchtungsvorrichtung eine elektrolumineszente Folie (5) oder eine herkömmliche oder organische Elektrolumineszenzdiode umfasst.

12. Uhr (1) des Typs Armbanduhr mit einer Anzeigeanordnung (2) nach einem der vorangehenden Ansprüche in einem Gehäuse (11), das mit einem Glas (17) verschlossen ist.

13. Uhr (1) nach Anspruch 12, **dadurch gekennzeichnet, dass** die Anzeigeanordnung (2) teilweise das Zifferblatt der Uhr bildet, und dass Zeiger (13, 14, 15) zur Angabe der Uhrzeit, die durch eine Antriebsvorrichtung eines Uhrwerks (16) angetrieben werden, den Träger (3) von geschliffenen Steinen (30) und die Anzeigezelle (4) für die Angabe der Uhrzeit überqueren.

14. Uhr (1) nach Anspruch 12, **dadurch gekennzeichnet, dass** Zeiger (13, 14, 15) zur Angabe der Uhrzeit, die durch eine Antriebsvorrichtung eines Uhrwerks (16) angetrieben werden, den Träger (3) von geschliffenen Steinen (30), der einen Teil des Uhrenzifferblatts bildet, überqueren, und dass die Anzeigezelle (4) für die Angabe der Uhrzeit über den Zeigern der Uhr und unter dem Uhrglas (17) angeordnet ist.
